# EUROPEAN PATENT SPECIFICATION

(11) **EP 0 820 380 B1**
(45) Date of publication and mention of the grant of the patent: **07.01.2004**
(21) Application number: 96909429.1
(22) Date of filing: 27.03.1996
(51) Int. Cl.: B32B 15/06, E04B 1/84

(54) **A VIBRATION DAMPING, LAMINATED MATERIAL**
VIBRATIONSDÄMPFENDES VERBUNDMATERIAL
MATERIAU STRATIFIE AMORTISSANT LES VIBRATIONS

(30) Priority: 31.03.1995 SE 9501167
(43) Date of publication of application: 28.01.1998
(73) Proprietor: Trelleborg Rubore Aktiebolag, 391 28 Kalmar (SE)
(72) Inventor: JOSEFSSON, Percy, S-388 80 Ljungbyholm (SE)
(74) Representative: Lundin, Björn-Eric
(86) International application number: PCT/SE1996/000393
(87) International publication number: WO 1996/030205

(56) References cited:
- WO-A-93/13329
- DE-A- 2 249 507
- US-A- 4 789 586

## Description

The present invention relates to a vibration damping laminated material, more specifically a workable wall material or wall covering material having a metal surface and being in the form of a laminate comprising two thin metal sheets or plates and a rubber layer sandwiched therebetween.

In the following, the term "wall" is used generally to signify any room or space defining structure, i.e. ceiling and floor structures, in addition to wall structures, and different forms of space defining casings, such as vessel walls and tubular walls, ducting, etc. The invention is thus not restricted to room-delimiting walls but has a wider connotation, although room-delimiting walls are discussed in the following by way of example. By "vibration damping" is meant that the material has the ability to dampen vibrations effectively in comparison with the vibration damping effect afforded by the metal material alone, i.e. solely the metal plate, wherewith vibrations of both high and low frequencies are dampened, including also frequencies that lie within the audible range. In other words, the vibration damping material also dampens sound, noise and flutter, etc.

The inventive vibration damping material is intended to solve problems related to wall coverings in rooms in which a high standard of hygiene is required, although it will be understood that the inventive material is not restricted to this use, as will be evident from the following. For instance, the inventive material will find use in several areas other than in spaces or rooms in which a high standard of hygiene is required, due to the surprisingly effective vibration damping properties of the material. The invention is discussed in the following, however, with regard to problems encountered within the field of hygiene or sanitation as a central discussion point.

Rooms and similar locations exist where responsible authorities often require the walls of said rooms to be easily cleaned for reasons of hygiene, and that the walls shall be cleaned continuously to avoid the spread of infection. Such rooms or like locations are normal in the foodstuff industry, where the risk of spreading infection to foodstuffs must be avoided to the greatest possible extent. The same problem is also found in industrial kitchens, where the same high standard of hygiene is also required. Rooms or like locations where a particularly high state of hygiene is required are also found in hospitals and like care establishments. Many of these rooms that require a high standard of hygiene are places in which many people work, therewith also placing on such rooms requirements that are connected with the working environment. One important requirement is that the noise level shall not be permitted to exceed the recommended noise level in work places.

It is generally considered that stainless metal sheet provides the best wall surface from the aspect of hygiene, and accordingly such material is, at present, used to a very large extent as wall material in rooms and like locations where a high standard of hygiene is demanded. Noise is dampened to necessary levels by insulating the wall inwardly of the stainless metal sheet with different types of foam material. Although this insulation can be effective in reducing noise to the desired level, it unfortunately introduces other problems of an hygienic nature, since such foam material has been found to provide a good centre for bacteria and their growth.

There is thus a need for a wall material for covering the walls of rooms and like locations in which a high standard of hygiene is required and which are also used as work places which require a sound-damping facility, and which wall material will satisfy both noise damping and the hygienic aspect without the earlier known side effects in the form of the risk of the formation new bacteria centres.

A laminated wall material according to the introduction is proposed in DE-A-2249507. The wall material is produced by applying a rubber coating having a thickness greater than 0.4 mm in the form of a thick and viscous mass obtained by applying butyl rubber in a solvent, for instance methyl chloride. The rubber layer or coating has a high viscosity at room temperature and therewith enables effective binding to be achieved by virtue of some kind of metal sheet adhering effect. The laminate is then compressed at room temperature under a pressure of 10 tonnes over a period of fifteen hours. The laminate thus produced is more effective in damping sound than simply sheet metal.

The effect varies greatly, however, between the test sheets, namely with an improved damping between 3 and 25 times. This known laminate has not been successful commercially, probably because of its limited fields of use and its varying damping properties.

The object of the present invention is to provide a wall material or a wall covering material which solves the aforesaid problems to a substantial degree, and to provide a material which combines high usability and workability in a cold state and has a surprisingly high ability to dampen vibrations, noise and other sound.

Thus, a general object of the invention is to provide a workable construction material that can be used instead of sheet metal in the manufacture of apparatus, vessels, ducting, channeling, tubing, etc., where a vibration damping material is a primary requirement, such as to be able to dampen different types of sound.

The invention is characterized in this regard by the features set forth in the following Claims.

The inventive vibration damping, cold workable wall material or wall covering material is thus comprised of a laminate having two thin metal sheets or plates and a rubber layer sandwiched therebetween, wherein the rubber layer is a solid rubber foil or film having a thickness of 0.08-0.30 mm and produced by so-called carrier calendaring and which is vulcanized together with each metal sheet in the absence of any binder layer. By "solid" is meant in this context a material which is not porous, as in the case of foam material. A rubber coating that is formed directly on the substrate by applying a solution containing rubber and a rubber solvent and thereafter applying heat to vapourize off the solvent will also have a relatively high porosity, and consequently it is impossible to avoid residues of vapourized solvent in the rubber in the form of the porosity. See in this respect the earlier proposed wall material (DE-A-2249507) mentioned above.

Distinct from the earlier known vibration damping laminated material, the rubber layer of the inventive laminated wall material has the smallest possible porosity that can be achieved with the technical manufacturing process. It is thus important that the rubber layer has those specific properties and the unique structure exhibited by carrier calendared rubber films. Among other things, there is obtained an homogeneity and evenness with regard to both physical properties and dimensions. For instance, the rubber layer shall be as free from pores to the greatest possible extent, a property which cannot be achieved with a rubber layer that has been applied in the form of a solution or paste and which has been rolled or pressed directly onto or between the metal sheets. Such rubber layers will always contain paste-forming residues or solvent residues which generate pore formations and other inhomogeneities and thereby give rise to weakening zones, which also occur in any glue layers present. It is also important that the rubber films are applied to the metal sheet with the aid of a carrier used in the calendaring process, this carrier ensuring highly effective and primarily flat abutment with the surface of the metal sheet in the absence of tendencies to forming irregularities in the abutment surfaces. These conditions also enable vulcanization of the rubber layer to the metal sheet to be effected readily with regard to the strength of the rubber-metal sheet bond. The thin metal sheets will preferably have a thickness of from 0.2-0.7 mm.

The rubber layer in the laminated wall material comprising a pore-free rubber foil or film produced by calendaring will preferably be made electrically conductive, for instance by adding carbon black in effective quantities to the mixture prior to the calendaring process, as is known in the art. The use of an electrically conductive rubber layer enables the material to be welded, e.g. spot-welded, for simple and effective adaptation, including jointing.

When the material is to be used in rooms and like spaces in which a high standard of hygiene is required, as discussed above, it is preferred that the metal sheets are stainless steel sheets. although in the case of other areas of use the sheet metal material may be chosen with regard to what is considered suitable for the particular application concerned, the main criterion being that the metal sheet can be joined to the rubber layer by vulcanization.

The wall material may be manufacture conveniently in accordance with our earlier patented method which involves the use of a disposable carrier in the production of rubber foil or rubber film by calendaring and subsequent vulcanization in a belt vulcanizing machine. The method is described in more detail in, e.g., Swedish Patent Specification SE-B-465763 and corresponding International Patent Publication WO. 91/13758. When the rubber layer is produced in accordance with our earlier patented method involving carrier calendaring of the rubber layer, the rubber foil or film thus formed obtains an homogeneity and evenness with regard to both its physical properties and its dimensions as indicated in the aforegoing, for instance a very low porosity. Because the rubber layer is applied to the first metal sheet with the aid of a carrier, very effective and primarily flat abutment is ensured with the metal sheet surface with no tendencies towards irregularities in the abutting surfaces. The rubber coated first sheet can then be readily applied to the second metal sheet, because the first metal sheet functions as a stable carrier in this stage of manufacture. With these conditions, the rubber foil or rubber film can be vulcanized readily to both plates without problems concerning the mechanical strength of the rubber-metal sheet joints. The method of belt vulcanizing in two stages is described in our earlier Swedish Patent Specification SE-B-500230 and in corresponding International Patent Publication WO 93/13329.

The inventive material can, in principle, be handled and treated as though it were a metal plate and is shaped and worked at least in a cold state by curving, bending, drawing, stretching, or pressing the material or subjecting said material to similar treatment, without the material loosing its vibration damping properties. This is because the material behaves as an homogenous product in this context, despite being a laminate. The reasons for this are because the rubber layer is solid and homogeneously produced by carrier calendaring, and because the layer is vulcanized directly onto the metal sheets in the absence of any binder layer which would otherwise create weak zones when shaping or working the material. The material thus exhibits no cracks or inhomogeneities in the joint between the rubber-metal boundary surfaces, not even when the material is deformed when being worked. This is the reason why the material was found to exhibit good properties in tests carried out on the material. Vulcanization of a solid rubber film to the metal sheets results in an homogenous structure and a firm bond across the whole surface of contact between the rubber layer and the metal sheet, and therewith in uniform damping properties. In the case of the earlier known material disclosed in DE-A-2249507, a solvent is used in the rubber to achieve some form of adhesion with the metal surfaces. This will obviously result in problems when working the material mechanically, for instance when deep-drawing the material, since the rubber and metal surfaces are joined solely by the stickiness or tackiness of the dissolved rubber.

The invention will now be described with reference to a number of examples which describe tests carried out with the inventive material.

### Example 1

Test panels were taken from two different metal-rubber-metal laminates constructed in accordance with the invention. The first panel, designated Panel A, measured 350 mm x 250 mm and comprised a laminate of 0.4 mm stainless steel - 0.12 mm rubber - 0.4 mm stainless steel, while the second panel, designated Panel B, measured 600 mm x 290 mm and comprised of 0.2 mm stainless steel - 0.08 mm rubber - 0.2 mm stainless steel.

The loss factor at room temperature regarding vibration damping at different frequencies was measured with the aid of the so-called power injection method used to determine the effective multi-modal loss factor of practical interest as a damping property for support carried sound reduction

At frequencies as low as 50-100 Hz, the loss factor was 13% for Panel A and 7.5% for Panel B. At frequencies of 1000-2000 Hz, the loss factor was 6-8% for Panel A and 6-30% for Panel B.

### Example 2

Smaller samples were taken from the panels of Example 1 and subjected to a beam bending test, these samples being designated Beam A and Beam B in the following.

The loss factor in respect of individual beam bending modes was determined at room temperature, using an LMS CADA-X modal analysis program for natural frequency and modal damping determination.

The samples were tested at frequencies from about 50 Hz up to about 700 Hz. Loss factors from about 11 up to about 20 were obtained with samples Beam A, where the lowest values were measured at frequencies between 100 Hz and 30 Hz and the highest values measured at frequencies above 600 Hz. The loss factor increased generally with frequency in the case of samples Beam B, from 4.8 at a frequency of 43 Hz to 19 at a frequency of 775 Hz.

### Example 3

The damping loss factor was determined in tests carried out in accordance with ISO 10112, partly on samples taken from laminated material constructed in accordance with the invention comprising stainless steel sheets and a rubber layer sandwiched therebetween, and partly on samples taken from "homogenous" stainless metal sheet of the same thickness as the laminated material. The loss factor of the laminated material was about 0.06 at 0°C and rose essentially linearly to 20°C, at which the loss factor was found to be about 0.20. This loss factor remained unchanged up to a temperature of 25°C, at which it began to fall slightly and was found to be about 0.15 at 40°C. Corresponding factors for the homogenous plate were about 0.001 across the full temperature range.

It will therefore be seen that the inventive material has a vibration damping effect which is generally 100-200 times greater than the vibration damping effect of homogenous stainless metal sheet of the same thickness. This can be compared with the improvement of 3-25 times which is said to be achievable with the material earlier proposed in DE-A-2249507. It is estimated that the known material possibly has a sound-damping effect which is at most one-third of the sound-damping effect achieved with the inventive material. It is also highly advantageous to be able to construct the laminate from thin layers of less than the 0.4 mm constituting the bottom thickness limit for the known material, particularly from the aspect of cold working and particularly as the sound-damping effect is not noticeably improved with rubber thicknesses above 0.30 mm.

## Claims

1. A vibration damping, cold workable wall material or wall covering material having metal surfaces and being in the form of a laminate that comprises two thin metal sheets and a rubber layer sandwiched therebetween, **characterized in that** the rubber layer is a solid rubber foil or rubber film having a thickness of 0.08-0.30 mm and produced by carrier calendaring and is vulcanized together with each of the metal sheets in the absence of any binder layer.

2. The wall material or the wall covering material according to Claim 1, **characterized in that** each metal sheet has a thickness of 0.2-0.7 mm.

3. The wall material or the wall covering material according to Claim 1 and Claim 2, **characterized in that** the rubber layer is formed from an electrically conductive rubber mixture.

4. The wall material or the wall covering material according to Claims 1-3, **characterized in that** the metal sheets are stainless steel sheets.

5. The wall material or the wall covering material according to Claims 1-5, **characterized in that** said material is shapeable in cold state by curving, bending, drawing, stretching, or pressing the material.

## Patentansprüche

1. Vibrationsdämpfendes, kaltverarbeitbares Wandmaterial oder Wandverkleidungsmaterial, das Metalloberflächen aufweist und in Form eines Laminates vorliegt, welches zwei dünne Metallbleche und eine zwischenliegende Gummischicht aufweist, **dadurch gekennzeichnet, dass** die Gummischicht aus einer festen Gummifolie oder Gummifilm mit einer Dicke von 0.08-0.30 mm besteht, der durch Träger-Kalandrieren hergestellt ist und mit jedem der Metallbleche ohne jegliche Verbindungsschicht vulkanisiert ist.

2. Wandmaterial oder Wandverkleidungsmaterial gemäß Anspruch 1, **dadurch gekennzeichnet, dass** jedes Metallblech eine Dicke von 0.2-0.7 mm aufweist.

3. Wandmaterial oder Wandverkleidungsmaterial gemäß Anspruch 1 und Anspruch 2, **dadurch gekennzeichnet, dass** die Gummischicht aus einer elektrisch leitenden Gummimischung hergestellt ist.

4. Wandmaterial oder Wandverkleidungsmaterial gemäß den Ansprüchen 1-3, **dadurch gekennzeichnet, dass** die Metallbleche aus rostfreien Stahlblechen bestehen.

5. Wandmaterial oder Wandverkleidungsmaterial gemäß den Ansprüchen 1-4, **dadurch gekennzeichnet, dass** das Material in kaltem Zustand durch Krümmen, Biegen, Ziehen, Dehnen oder Pressen des Materials verformbar ist.

## Revendications

1. Matériau usinable à froid pour parois ou un matériau de revêtement pour parois amortissant les vibrations, se composant de surfaces en métal et se présentant sous forme de plaqué fait de deux fines tôles en métal et d'une couche en caoutchouc "prise en sandwich" entre ces deux tôles, **caractérisé en ce que** la couche en caoutchouc est une feuille en caoutchouc ou une pellicule en caoutchouc solide ayant une épaisseur de 0.08 à 0.30 mm, formée par un support de calandrage et vulcanisé en même temps que chacune des tôles en métal en l'absence d'une quelconque couche de liant.

2. Matériau pour parois ou matériau de revêtement pour parois selon la revendication 1, **caractérisé en ce que** chaque tôle en métal a une épaisseur de 0.2 à 0.7 mm.

3. Matériau pour parois ou matériau de revêtement pour parois selon les revendications 1 et 2, **caractérisé en ce que** la couche en caoutchouc est constituée d'un mélange de caoutchoucs conducteur d'électricité.

4. Matériau pour parois ou matériau de revêtement pour parois selon les revendications 1-3, **caractérisé en ce que** les tôles en métal sont des feuilles en acier Inoxydable.

5. Matériau pour parois ou matériau de revêtement pour parois selon les revendications 1-5, **caractérisé en ce que** ledit matériau est modelable à froid par cintrage, pliage, emboutissage, cintrage à plat, ou par embouti peu profond du matériau.
